# EUROPÄISCHE PATENTSCHRIFT

(11) **EP 2 606 560 B1**
(45) Veröffentlichungstag und Bekanntmachung des Hinweises auf die Patenterteilung: **28.10.2015**
(21) Anmeldenummer: 11767222.0
(22) Anmeldetag: 29.09.2011
(51) Int. Cl.: H02K 17/16, H02K 15/00

(54) **STAB EINES KÄFIGLÄUFERS**
SQUIRREL-CAGE ROTOR BAR
BARRE D'UN ROTOR À CAGE

(30) Priorität: 30.09.2010 DE 102010041796; 30.09.2010 DE 102010041788; 30.09.2010 DE 102010041795
(43) Veröffentlichungstag der Anmeldung: 26.06.2013
(73) Patentinhaber: Siemens Aktiengesellschaft, 80333 München (DE)
(72) Erfinder: BÜTTNER, Klaus, 97618 Hollstadt (DE); MÜLLER, Michael, 97688 Bad Kissingen (DE); WÖHNER, Norbert, 97618 Heustreu (DE)
(86) Internationale Anmeldenummer: PCT/EP2011/066954
(87) Internationale Veröffentlichungsnummer: WO 2012/041943

(56) Entgegenhaltungen:
- DE-A1- 4 308 683

## Beschreibung

Die Erfindung betrifft einen Käfigläufer für eine Asynchronmaschine, Käfigläuferstäbe, sowie eine Asynchronmaschine.

Ein Käfigläufer ist aus der DE 43 08 683 A1 bekannt. Dieser Läufer umfasst ein Blechpaket mit Nuten, in die zunächst Kurzschlussstäbe aus Kupfer eingeschoben werden. Stirnseitig werden die Kupferstäbe durch Kurzschlussringe miteinander verbunden. Diese Kurzschlussringe werden durch ein Druckgussverfahren aus Aluminium hergestellt. Beim Vergießen der Kurzschlussringe wird gleichzeitig der in den Nuten gegenüber den eingesetzten Kupferstäben verbleibende Restquerschnitt mit Aluminium ausgegossen, so dass die Kurzschlussringe mit den in dem Restquerschnitt gebildeten druckgegossenen Stabteilen verbunden werden.

Da Kupfer im Vergleich zu Aluminium einen sehr viel höheren elektrischen Leitwert hat, kann auf diese Weise der Wirkungsgrad einer derartigen Asynchronmaschine gegenüber einer Asynchronmaschine mit einem vollständig aus Aluminiumdruckgussmaterial bestehenden Käfigläufer entscheidend verbessert werden.

Im Betrieb durchlaufen die Asynchronmaschine und damit auch der Käfigläufer von den elektrischen Verlusten innerhalb der Maschine abhängige thermische Zyklen. Hierdurch kommt es zu einer Wärmeausdehnung im Läufer, die aufgrund der unterschiedlichen Wärmeausdehnungunskoeffizienten von Aluminium und Kupfer bei einem derartigen Käfigläufer inhomogen ist. Hierdurch können sich die Kupferstäbe aus dem Aluminiumdruckgussmaterial der Kurzschlussringe lösen, wodurch schließlich der elektrische Übergangsleitwert zwischen den Kurzschlussringen und den Läuferstäben verschlechtert wird.

Ähnliche Wirkungsgrade wie bei den zuvor beschriebenen mittels Aluminiumdruckgussverfahren hergestellten Käfigläufern lassen sich mit einem Kupferdruckgussläufer realisieren. Da dieser komplett aus Kupfer besteht, treten die oben genannten Probleme hinsichtlich der unterschiedlichen Wärmeausdehnungskoeffizienten nicht auf. Jedoch ist der Kupferdruckgussprozess sehr aufwendig und stellt hohe Anforderungen an das Druckgusswerkzeug, da Kupfer für den Druckgussprozess auf Temperaturen von über 1.000 °C erwärmt werden muss. Bei Aluminium hingegen kann mit sehr viel niedrigeren Temperaturen beim Druckgießen gearbeitet werden. Ferner ist ein vollständig aus Kupfer bestehender Käfigläufer schwerer und damit bezüglich seines Anlaufverhaltens träger als der aus DE 43 08 683 A1 bekannte Käfigläufer, der Kurzschlussringe aus Aluminium aufweist.

Eine weitere Asynchronmaschine mit einem Käfigläufer ist aus der WO 2010/100007 bekannt. Um den elektrischen Wirkungsgrad bei einem aus zwei Materialien bestehenden Kurzschlussläufer zu erhöhen, umfasst dieser
- ein Läuferblechpaket mit Nuten,
- stirnseitig an das Läuferblechpaket angegossene Kurzschlussringe eines ersten Materials und
- in den Nuten angeordnete Leiter eines zweiten Materials mit einem höheren spezifischen elektrischen Leitwert als der des ersten Materials,
wobei die Leiter an ihrer Oberfläche eine Beschichtung aus einem Beschichtungsmaterial aufweisen, die über eine erste Legierungsschicht aus dem zweiten Material und dem Beschichtungsmaterial an das zweite Material der Leiter angrenzt und über eine zweite Legierungsschicht aus dem ersten Material und dem Beschichtungsmaterial an das gegossene erste Material angrenzt.

Weist ein Käfigläufer als Käfig zumindest zwei unterschiedliche elektrisch leitende Materialien wie Aluminium und Kupfer auf, kann dieser Käfigläufer auch als ein Hybridläufer bezeichnet werden. Dabei werden bevorzugt Kupferstäbe in ein Läuferpaket eingelegt und diese beim Gießen des Kurzschlussringes mit Aluminium mit demselbigen im Läuferpaket vergossen. Die Betriebsdaten einer Asynchronmaschine mit Hybridläufer sind von der Ausgestaltung der Verbindung zwischen eingelegtem Formteil (Läuferstab aus Kupfer) und Kurzschlussring abhängig. Die Qualität des Kurzschlussrings und die erzielte Verbindung zwischen den verwendeten Komponenten sind wiederum vom Gießprozess und der erreichten Füllung des freien Volumens abhängig. Eine Verbesserung des Gießprozesses ermöglicht hiermit Motoren mit besseren Betriebsdaten und führt zu einer Verbesserung des Wirkungsgrades bei gleicher Blechpaketlänge.

Bei einem Hybridläufer schrumpft nach dem Druckguss der Kurzschlussring während des Abkühlungsvorgangs. Dabei entstehen extreme Druckkräfte auf die Oberseiten der eingeschobenen Kupferstäbe. Auf der Innenseite des Kurzschlussringes schrumpft der Aluminiumring ebenso. Da der Läuferstab im Läuferpaket im Nutgrund sitzt und das Blechpaket eine Bewegung in Richtung Welle sehr stark begrenzt, kann der Stab so nicht dem weichenden inneren Bereich des Kurtschlussrings folgen. Darüber hinaus weisen Stäbe eine enorme Steifigkeit in radialer Richtung auf, so dass eine plastische Verformung der Stäbe nahezu ausgeschlossen ist. Dies kann dazu führen, dass es partiell zur Bildung eines Spalts an den Seitenflanken und dem unteren Teil des Stabes kommt. Dies vergrößert den Gesamtübergangswiderstand, was sich nachteilig auf die Performance und Haltbarkeit der Asynchronmaschine auswirkt.

Zur Verbesserung der Qualität eines Käfigläufers kann weiterhin auch ein Augenmerk gerichtet werden auf eine exakte Positionierung der Stäbe, vorzugsweise gleichmäßig im Nutgrund des Läuferpaketes zur Erreichung eines unwuchtarmen Läuferpaketes. Darüber hinaus ist die Verbindungsstelle Läuferstab (Formteil) zu Kurzschlussring wie bereits beschrieben maßgeblich für die Betriebsdaten verantwortlich. Eine Verbesserung dieser führt automatisch zu besseren elektrischen Daten insbesondere des Wirkungsgrades.

Im Betrieb einer Asynchronmaschine ist der Käfigläufer großen Fliehkräften ausgesetzt, welche den Käfigläufer schädigen können und damit die Lebensdauer bzw. die Betriebsdauer der Asynchronmaschine negativ beeinflussen können. Vorteilhaft sind deshalb stabile mechanische Verbindungen der Komponenten. Dies betrifft insbesondere Komponenten, welche elektrisch leitend sind.

Eine Aufgabe der Erfindung ist es, die Qualität einer Asynchronmaschine, eines Käfigläufers bzw. eines Läuferstabes zu verbessern. Eine Aufgabe der Erfindung kann ferner darin gesehen werden Maßnahmen zur Überwindung oder Reduzierung zumindest eines der obig genannten Probleme vorzusehen.

Eine Lösung der Aufgabe gelingt gemäß einem Hauptanspruch dieser Anmeldung. Vorteilhafte Ausgestaltungen ergeben sich gemäß den abhängigen Ansprüchen.

Um den elektrischen Wirkungsgrad eines Kurzschlussläufers zu verbessern kann dieser zwei elektrisch leitende Materialien für den Käfig aufweisen, wobei der Käfig vorteilhaft auch mittels eines Druckgussverfahrens hergestellt wird.

Ein Käfigläufer ist derart ausbildbar, dass dieser aufweist:
- ein Läuferblechpaket mit Nuten,
- stirnseitig an das Läuferblechpaket angegossene Kurzschlussringe eines ersten Materials und
- in den Nuten angeordnete Leiter eines zweiten Materials mit einem höheren spezifischen elektrischen Leitwert als der des ersten Materials
umfasst. Das erste Material weist vorzugsweise Aluminium auf bzw. es ist eine Aluminiumlegierung. Das zweite Material weist vorzugsweise Kupfer auf bzw. ist eine Kupferlegierung.

In einer Ausgestaltung weisen dabei die Leiter an ihrer Oberfläche eine Beschichtung aus einem Beschichtungsmaterial auf, wobei das Beschichtungsmaterial das weitere Material sein kann.

Eine Fertigung eines Käfigläufers für eine Asynchronmaschine kann folgende Verfahrensschritte aufweisen:
- Einlegen von Leitern (Läuferstab) eines zweiten Materials (insbesondere Kupfer) in Nuten eines Läuferblechpaketes und
- stirnseitiges Angießen von Kurzschlussringen aus einem ersten Material (insbesondere Aluminium) mit einem geringeren spezifischen elektrischen Leitwert als der des zweiten Materials an das Läuferblechpaket.

Die Kurzschlussstäbe ragen an beiden stirnseitigen Enden des Läuferblechpakets aus diesem heraus und in die gegossenen Kurzschlussringe hinein. Eine Erhöhung der Bindungskräfte zwischen Leiterenden und Kurzschlussringen kann dadurch erreicht werden, dass zwischen den Materialien eine mischkristalline Verbindung entsteht.

In einer Ausgestaltung eines Käfigläufers werden die mit den Läuferstäben (Leitern) bestückten Nuten des Läuferpaketes durch ein Druckgussverfahren mit dem ersten Material ausgefüllt, wobei die Kurzschlussringe mittels des Druckgussverfahrens hergestellt sind. Hierdurch werden die Stäbe in den Nuten am radial nach innen gerichteten Nutgrund fixiert. Läuferstab und der gehärtete Guss in der Nut bilden einen Käfigstab des Käfigläufers aus.

Bei einer Erwärmung des Käfigläufers im Betrieb werden Temperaturen von ca. 150°C erreicht. Dadurch kommt es zu einer Wärmeausdehnung in den durch das erste Material ausgegossenen Nutbereichen, insbesondere dann, wenn das erste Material Aluminium ist. Hierdurch kann sich der Übergang zwischen den Leitern und den Kurzschlussringen lösen, wodurch es zu einer Verschlechterung des elektrischen Leitwertes im Bereich des Übergangs zwischen den Kurzschlussringen und den Leitern kommt. Das im Druckgussverfahren aus Abdichtungsgründen axial zusammengepresste Läuferblechpaket kann sich axial wieder aufweiten, wenn die Verbindung zwischen den Leitern und den gegossenen Kurzschlussringen keine ausreichende Haltekraft aufbringen kann.

Durch die Beschichtung können die Leiter durch maximal mögliche Bindungskräfte an den Druckguss gebunden werden. Entsprechend bleibt die Verbindung zwischen den Leitern und den Kurzschlussringen trotz unterschiedlicher thermischer Ausdehnungskoeffizienten des ersten und zweiten Materials auch dann stabil, wenn der Käfigläufer im Betrieb ausgeprägte thermische Zyklen durchfährt. Bei hohen Drehzahlen bewirken auch die auf den Läufer wirkenden Fliehkräfte teils heftige Spannungen in dem Leiter-Kurschlussring gebildet. Weiterhin wird durch die Legierung ein optimaler elektrischer Übergangsleitwert zwischen dem ersten und zweiten Material erzielt.

Weist der Käfig des Käfigläufers als elektrische leitende Materialien Aluminium und Kupfer auf, so ergibt sich dabei auch eine wirtschaftlich kostengünstige Lösung. Ein Hybridkäfigläufer weist aufgrund der Leiter aus Kupfer einen guten elektrischen Wirkungsgrad auf und ist einfacher herzustellen als ein Kupferdruckgussläufer. Im Vergleich zu einem Kupferdruckgussläufer weist der Hybridläufer eine geringere Masse und damit ein geringeres Trägheitsmoment auf, da dessen Kurzschlussringe aus dem vergleichsweise leichten Aluminium gefertigt sind. Mit einem Hybridläufer kann folglich der Wirkungsgrad einer Asynchronmaschine verbessert werden. Um einen derartigen Käfigläufer herzustellen, werden beispielsweise zunächst die Läuferstäbe aus Kupfer (Kupferleiter) in die Nuten des Läuferblechpakets eingeschoben. Anschließend wird mit einem Aluminiumdruckgussverfahren der Bereich der Nuten ausgefüllt, der nicht durch die Läuferstäbe eingenommen wird. Gleichzeitig werden die Kurzschlussringe aus Aluminium vorteilhafterweise mittels des Druckgussverfahrens gefertigt.

Die Verbindung zwischen den Läuferstäben und den Kurzschlussringen kann in einer Ausgestaltung eines Käfigläufers dadurch verstärkt werden, dass die Läuferstäbe an beiden Enden jeweils einen aus dem Läuferblechpaket heraus und in die Kurzschlussringe hereinragenden Endbereich mit Formschlussmitteln zur Erzeugung eines Formschlusses zwischen den Leitern und den gegossenen Kurzschlussringen aufweisen. Durch diese Formschlussmittel in den Endbereichen der Leiter wird die Verbindung zwischen den Leitern und den Kurzschlussringen weiter gestärkt. Die an den Enden herausragenden Leiter sind durch die Formschlussmittel mit den Kurzschlussringen axial verspannt. Damit werden die Leiter je nach Temperatur und je nach Wärmeausdehnungskoeffizienten der Leiter und der Kurzschlussringe auf Zug oder Druck beansprucht. Der Kurzschlussläufer ist hierbei so auszulegen, dass die Beanspruchung stets im elastischen Bereich bleibt. Durch die verwendeten Formschlussmittel wird ein Verschieben der Leiter innerhalb der Kurzschlussringe oder ein Herausziehen der Leiter aus den Kurzschlussringen verhindert, wodurch ein Abriss der Fügestelle zwischen den beiden Materialien vermieden werden kann. Als Formschlussmittel sind beispielsweise Durchgangslöcher in den Endbereichen der Leiter vorstellbar, die von der Schmelze während des Gussprozesses ausgefüllt werden. Anstelle eines Durchgangslochs sind als Formschlussmittel auch Aussparungen in den Endbereichen, Verjüngungen der Leiter innerhalb der Endbereiche, Kerben, Rändelungen der Endbereiche, Verwindungen der Leiter in den Endbereichen oder eine Aufspaltung der Leiter in den Endbereichen vorstellbar. Auch eine Vielzahl von Durchgangslöchern im Endbereich des Läuferstabes (Kupferstab) sind möglich. In einer Ausgestaltungsvariante erstreckt sich ein Durchgangsloch vom Bereich des Kurzschlussrings in den Bereich des Läuferpaketes. Das Durchgangsloch füllt sich über den Teil im Kurzschlussringbereich mit Gussmaterial. Durch die Überschneidung können im Übergangsbereich zwischen Läuferpaket und Kurzschlussring auftretende thermisch verursachte Spannungen reduziert werden.

Um die mechanische Festigkeit eines Läuferstabes im Käfigläufer zu verbessern, kann der Läuferstab mit einer vorteilhaften Kontur versehen sein. Diese Kontur kann in axialer Richtung durchgängig sein oder auch nur partiell vorhanden sein. Die formgebende Geometrien der eingebrachten Kontur vergrößern die nach radial außen gerichtete Fläche des jeweiligen Läuferstabes.

In einer Ausgestaltung eines Läuferstabes eines Käfigläufers einer Asynchronmaschine, weist dieser vorteilhaft an radialen Außenflächen eine Kontur auf. Die radialen Außenflächen sind Flächen die anderen radialen Außenflächen weiterer Läuferstäbe in einer Umfangsrichtung gegenüber liegen. Die Kontur kann beispielsweise eine Rille oder eine Vielzahl von Rillen aufweisen. Die Rillen vergrößern die Oberfläche und verbessern damit die Haftung zwischen Läuferstab und Vergussmaterial, welche als Schmelze in die Nuten des Läuferpaketes eingeführt wird.

Rillen können unterschiedliche Querschnitte aufweisen, wie z.B.: einen bogenförmigen Querschnitt und/oder einen keilförmigen Querschnitt.

Die Kontur bzw. die Rillen des Läuferstabes bzw. der Läuferstäbe weisen eine Ausrichtung auf. Diese Ausrichtung kann beispielsweise axial in Bezug auf eine Rotationsachse des Käfigläufers sein. In einer weiteren Ausgestaltung kann eine geschrägte Ausrichtung z.B. in Bezug auf die Rotationsachse vorliegen.

In einer weiteren Ausgestaltung eines Läuferstabes können sich dessen Rillen auch schneiden oder tangieren. Daraus entstehende Konturmuster können vorteilhaft zur Verbesserung der Haftung beitragen.

Ein Läuferstab kann die Kontur in verschiedenen Bereichen aufweisen wie:
- im Bereich des Kurzschlussrings, und/oder
- im Bereich eines Läuferpaketes.

Ein Läuferstab kann lediglich die beschriebenen Konturen an radialen Außenflächen aufweisen um die Qualität eines Kurzschlussläufers zu verbessern oder auch weitere Merkmale aufweisen wie diese im Folgenden beschrieben sind. Auch diese weiteren Merkmale können einzeln bei einem Läuferstab bzw. bei einem Kurzschlussläufer vorhanden sein oder auch in Kombination mit einer Vielzahl von Merkmalen.

Ein Läuferstab kann derart ausgebildet sein, dass dieser einen axialen Kanal aufweist. Der axiale Kanal ist dabei in einem Bereich des Läuferstabes positioniert, welcher im eingebauten Zustand im Käfigläufer vorteilhaft radial nach außen gerichtet ist. Der Kanal ist also im Bereich einer Fläche, welche als eine tangentiale Außenfläche des Läuferstabes bezeichnet werden kann.

In einer Ausgestaltung des Läuferstabes weist dieser einen axialen Kanal auf, wobei der Kanal eine Tiefe, eine Öffnungsbreite, einen ersten Schenkel mit einer ersten Schulter und einen zweiten Schenkel mit einer zweiten Schulter aufweist, wobei die Öffnungsbreite größer ist als die Schulterbreite. Dadurch wird erreicht, dass die Kanalwände nicht steif sind. Die Schenkel bilden Wände des Kanals aus, wobei die Dicke der Wände über den Querschnitt variieren kann. Die Schulterbreite gibt dabei eine Wandstärke der Schenkel an.

Vorteilhaft ist in der radial außen liegenden Fläche des Läuferstabes (dabei handelt es sich insbesondere um ein Formteil) ein axial durchgängiger Kanal vorhanden. Durch den Kanal bildet sich eine bestimmte Kontur des Läuferstabes aus, wobei es sich bei dem Kanal auch um eine in den Läuferstab eingebrachte Nut handeln kann. Die Kanal-Kontur weist eine Breite Tiefe und einen radial nach außen gerichteten Öffnungswinkel auf. Die Position des Kanals ist bei Doppelstabläufern beispielsweise mittig zu einer Streustegöffnung ausgerichtet. Hierdurch ist eine durchgängige Querschnittsfläche für die Schmelze geschaffen.

Der Kanal im eingelegten Läuferstab wirkt bei Hochstabläufern wie ein zweiter Gießkanal. In diesem ist keine Blechung und damit sind keine Störstellen vorhanden. Diese Störstellen rufen turbulente Verwirbelungen innerhalb der Schmelze während des Befüllens des Blechpaketes hervor. Somit wird bei Verwendung des Kanals im Läuferstab das Gießergebnis verbessert.

Wenn die Position des Kanals an der Streustegöffnung orientiert ist, entsteht bei Doppelstabläufern ein zusammenhängender Gießkanal aus der Fläche der Anlaufnut und der verbliebenen Fläche der Betriebsnut. Hierdurch können sich die Teilflächen gegenseitig während des Druckgusses unterstützen. Bei separaten Flächen kann es zu Erstarrungen innerhalb des Blechpakets kommen, da Teilflächen eine ungenügende Größe haben können um den Läuferstab auszubilden. Auch hier wirkt der Kanal im Läuferstab im eingelegten Formteil wie ein zweiter Gießkanal. In diesem ist keine Blechung und damit sind keine Störstellen vorhanden. Diese Störstellen rufen turbulente Verwirbelungen innerhalb der Schmelze während des Befüllens des Blechpaketes hervor. Somit wird bei Verwendung des Kanals im Läuferstab das Gießergebnis verbessert. Beim Kanal des Läuferstabs handelt es sich um einen offenen Kanal, wobei durch das Einlegen des Läuferstabes in die Nut im Läuferpaket ein geschlossener Gesamtkanal vorhanden ist.

Durch die Kontur des Kanals ist ein Druckaufbau in Abhängigkeit der formgebenden Geometrien, insbesondere des Öffnungswinkels Alpha des Kanals, innerhalb des Blechpaketes gegeben. Dieser erzeugt eine radial wirkende Kraft, welche den Läuferstab in radialer Richtung nach innen in den Nutgrund des Läuferpaketes positioniert. Mit dieser Vorgehensweise kann die Urunwucht des Käfigläufers reduziert werden.

Durch die geeignete Positionierung der Läuferstäbe in den Nuten des Läuferpaketes des Käfigläufers und durch die geeignete Wahl der Größe der Schenkel des Läuferstäbe im Vergleich zur Kanalöffnung in den Läuferstäben wird ein Eindringen der Schmelze zwischen Bleckpaket und radial innen liegender Formteilfläche (radiale Außenfläche) vermieden. Dies führt zu einer Reduktion der Querströme. Dies führt zu einem besseren Betriebsverhalten während des Anlaufens und zu einem verbesserten Wirkungsgrad bei Belastung des Motors im Bereich des Nennbetriebspunktes.

Die Schrumpfung der Schmelze auf die Wandung des Kanals des Läuferstabes hat Einfluss auf die Qualität der Verbindung zwischen eingelegtem Läuferstab und der erkalteten Schmelze. Eine Vergrößerung dieser Fläche, hervorgerufen durch die Kontur, führt automatisch zu einer Verbesserung des Verknüpfungssystems zwischen eingelegtem Läuferstab und erstarrter Schmelze. Daraus ergibt sich in eine mechanisch stabilere Verbindung. Darüber hinaus setzt dies den gesamt Käfigwiderstand herab. Dies äußert sich in kleinerem Schlupf und damit in einer Verbesserung des Wirkungsgrades.

In einer Ausgestaltung des Läuferstabes kann die Tiefe des Kanals dem 0,73-fachen bis 3-fachen der Öffnungsbreite des Kanals des Läuferstabes entsprechen.

In einer weiteren Ausgestaltung des Läuferstabes ergibt sich durch den ersten Schenkel und den zweiten Schenkel ein Öffnungswinkel mit einem Wert von 25° bis 50°. Der Öffnungswinkel kann über die axiale Länge des Läuferstabes konstant sein oder auch variieren.

In einer Ausgestaltung des Läuferstabes ist die Tiefe des Kanals größer als die halbe Höhe des Läuferstabes. Damit kann gegebenenfalls die Elastizität der Schenkel (Kanalwände) erhöht werden um so die Dichtwirkung zu erhöhen. Die Schmelze wird unter Druck in die Nuten des Läuferpaketes gepresst. Durch den Druck wird der Läuferstab in die Nut des Läuferpaketes gepresst. Da sich die Schmelze auch im Kanal des Läuferstabes befindet, presst die Schmelze die Schenkel an die Seitenwände der Nut im Läuferpaket, so dass eine Dichtwirkung erzielt wird. Auch auf die Schultern des Läuferstabes wird Druck durch die Schmelze ausgeübt. Dieser Druck ist in Richtung der Achse des Käfigläufers gerichtet, da die Schulterflächen eine tangentiale Ausrichtung aufweisen. Durch diesen Druck auf die Schultern wird der Läuferstab in den Nutgrund der Nut im Läuferpaket gedrückt.

Demnach ist ein Käfigläufer derart ausführbar, dass dieser ein Läuferpaket mit Nuten (im Sinne von Durchlässen bzw. Durchbrüchen im Läuferpaket) aufweist, wobei Läuferstäbe in den Läufernuten positioniert sind, wobei der jeweilige Läuferstab nur einen Teil des Querschnitts der jeweiligen Läufernut einnimmt, wobei ein Gießkanal, also die Schmelze, derart ausgebildet ist, dass Gießmaterial die Schultern benetzen kann. Somit wirkt auch der Druck der Schmelze auf die Schultern.

In einer Ausgestaltung des Käfigläufers weist der Gießkanal, welcher durch die Nut (im Sinne von Durchlässen bzw. Durchbrüchen im Läuferpaket) vorgegeben ist, eine Einschnürung aufweist. Die Einschnürung teilt den Gießkanal in zwei Bereiche. In einem Bereich ist der Läuferstab einzulegen und der Rest mit Schmelze zu füllen und im anderen Bereich wird die Nut gänzlich mit Schmelze gefüllt. Die Läuferstäbe des Käfigläufers weisen dabei vorzugsweise Kupfer auf, wohingegen die Schmelze vorzugsweise Aluminium aufweist. Stab und vergossene Schmelze bilden gemeinsam den Käfig des Läufers aus.

Bei einem derartigen Hybridläufer schrumpft nach dem Druckguss der Kurzschlussring während des Abkühlungsvorgangs. Auch auf der Innenseite des Kurzschlussringes schrumpft der Aluminiumring. Wenn der Läuferstab im Läuferpaket im Nutgrund sitzt und das Blechpaket eine Bewegung in Richtung Welle sehr stark begrenzt, kann der Stab so nicht dem weichenden Innenring folgen. Dies führt zu Spannungen zwischen den Materialen und gegebenenfalls zu Spaltbildungen z.B. an Seitenflanken und dem unteren Teil des Stabes. Dies vergrößert den Gesamtübergangswiderstand, was sich nachteilig auf die Performance und Haltbarkeit der Asynchronmaschine auswirkt.

Um diesem Problem entgegenzuwirken können Gegenmaßnahmen getroffen werden. Diese können bei einem Käfigläufer separat oder in Verbindung mit den obig beschriebenen Verbesserungen von Läuferstäben und Käfigläufer durchgeführt werden.

Ein Käfigläufer einer Asynchronmaschine ist derart ausbildbar, dass ein Läuferstab in einem Läuferpaket eine Kippstelle aufweist. Dies bedeutet, dass der Läuferstab eingelegt im Läuferpaket vor dem Verguss in Bezug auf einen Kipppunkt kippeln kann. Die Kippstelle befindet sich dabei nicht im Bereich der Stirnseiten des Läuferpaketes sondern zwischen diesen, also im inneren des Läuferpaketes. Dabei kann das System aus Käfigläufer und Läuferstab derart ausgebildet sein, dass auch mehr als eine Kippstelle vorhanden ist. Der Läuferstab ist dabei vorteilhaft so kippbar, dass dessen Enden zur Achse des Käfigläufers hin gekippt werden können. Im Endbereich des Läuferpaketes ergibt sich also ein Spalt zum Läuferstab, wobei der Läuferstab eine Biegung in Richtung des Spaltes vollziehen kann. Der Spalt ermöglicht also eine Biegung der Enden der Läuferstäbe zur Achse hin. Dies hat den Vorteil, dass der Stab der Kraft nachgeben kann die entsteht, wenn sich bei Erstarrung der Schmelze der Kurzschlussring zusammenzieht und eine Kraft auf den Stab in Richtung der Achse des Käfigläufers ausübt. Nach der Erstarrung kann der Spalt ganz oder teilweise geschlossen sein, bzw. sich verkleinert haben.

In einer Ausgestaltung des Käfigläufers weist zumindest ein Läuferstab eine Nase auf. Die Nase steht vom Stab ab und ermöglicht ein Kippeln des Stabes um die Nase. Der Läuferstab kann auch zwei Nasen aufweisen, wobei diese in axialer Richtung unterschiedlich positioniert sind.

Die nasenförmige Ausbuchtung am Stab erlaubt es dem schrumpfungsbedingten Druck des äußeren Kurzschlussringes nachzugeben. Dies vermindert die Spaltbildung, da der äußere Teil stärker als der innere Teil des Kurzschlussrings schrumpft. An den Stabenden eingebrachte Rillen bzw. Konturen bilden eine Verzahnung mit der Schmelze. Dies ermöglicht eine weitere Angriffsfläche um den Stab während der Schrumpfung nach innen zu bewegen.

Die stützende Geometrie z.B. eines Stahlrings kann zusätzlich die zur Welle hin gerichtete Schrumpfung reduzieren. Durch diese Maßnahmen lässt sich der Übergangswiderstand zwischen Stab und Ring verbessern. Das Betriebsverhalten und der Wirkungsgrad werden verbessert. Darüber hinaus kann eine produktionsbedingte Streuung bzgl. dem Wirkungsgrad gleichartiger Maschinen aus derselben Fertigung verringert werden. Dies gilt auch für die nachfolgend beschriebenen weiteren Varianten von Läuferstab, Läuferpaket bzw. Käfigläufer.

In einer weiteren Ausgestaltung des Käfigläufers weist der Läuferstab eine Torsion in einer axialen Richtung auf, wobei die Torsionsachse innerhalb des Läuferstabes verläuft. Dadurch lässt sich der Läuferstab krümmen, was insbesondere dann vorteilhaft ist, wenn auch die Nut im Läuferpaket in welche der Stab einzuführen ist gekrümmt ist.

Der Läuferstab ist auch bezüglich des Flächenschwerpunktes verdrehbar, was auch zu einer Krümmung führt, welche einer Krümmung einer Nut (Nutkanals) im Läuferpaket entsprechen kann.

Eine derartige Krümmung der Nuten, also der Nutkanäle in welche die Stäbe eingelegt werden, ist bei einem Läuferpaket mit einer Vielzahl von Läuferblechen erreichbar, wenn die Läuferbleche zueinander um einen Winkel bezüglich einer Achse (insbesondere der Rotationsachse des Käfigläufers) verschoben sind. Durch diese Winkelverschiebung ergibt sich auch eine Kippstelle in dem Kanal, so dass der Läuferstab keine Nase aufweisen muss. Der Läuferstab ist jedoch wie oben beschreiben vorteilhaft verdreht, also vor dem Fügen an den axialen Nutverlauf angepasst.

Alternativ kann ein geschrägtes Läuferpaket auch durch ein abschließendes Verdrehen eines bereits mit geraden Formteilen bestückten Paketes erfolgen.

Die Läuferbleche weisen beispielsweise gestanzte Ausnehmungen auf, wobei sich durch die Aneinanderreihung der Bleche eben ein Kanal (eine Nut) für die Stäbe ergibt.

In einer Ausgestaltung des Käfigläufers weisen die Läuferbleche zueinander gleich große Winkelverschiebungen auf.

Die Nut für die Stäbe im Läuferpaket kann zusätzlich oder alternativ auch eine axiale Schrägung aufweisen, welche wie die Schrägung durch den Winkelversatz der Bleche eine Kippstelle entstehen lässt.

Um während des Vergießens der Schmelze ein Kippeln der Läuferstäbe zu unterbinden, werden diese vor dem Gießen arretiert. Dies kann z.B. mittels von Drähten geschehen, welche an den jeweiligen Endseiten der Stäbe um alle Stäbe gemeinsam gewickelt werden. Durch die Wicklung ergibt sich eine Art Drahtring um alle Stäbe einer Seite des Käfigläufers.

Im Folgenden wird die Erfindung anhand der in den Figuren dargestellten Ausführungsbeispiele exemplarisch beschrieben und erläutert. Es zeigen:
- FIG 1: eine Ausführung eines Käfigläufers einer Asynchronmaschine in Hybridbauweise,
- FIG 2: einen Schnitt durch den Käfigläufer,
- FIG 3: einen Schnitt durch eine Grenzfläche zwischen einem beschichteten Läuferstab und einem druckgegossenen Material,
- FIG 4: eine weitere Ausführung des Käfigläufers in Hybridbauweise,
- FIG 5: eine Asynchronmaschine,
- FIG 6: eine weitere Ausführung des Käfigläufers,
- FIG 7: eine Position des Läuferstabes im Läuferpaket,
- FIG 8: eine Position des Läuferstabes im Kurzschlussring,
- FIG 9 bis 14: Variationen von Kippkonstruktionen für den Läuferstab,
- FIG 15 bis 30: Variationen von seitlichen Konturen im Läuferstab,
- FIG 31 und 32: Variationen von mechanischen Verbindungen zwischen dem Läuferstab und dem Kurzschlussring,
- FIG 33: einen Stützring für den Kurzschlussring,
- FIG 34 bis 37: Variationen von Querschnitten des Läuferstabes,
- FIG 38: einen Läuferstab mit Kanal eingegossen im Kurzschlussring und gestützt durch einen Stützring;
- FIG 39: eine geschlossene Nut im Läuferblechpaket,
- FIG 40: einen Läuferstab mit einem Gusskanal für die Schmelze,
- FIG 41: einen Läuferstab in der geschlossenen Nut des Läuferblechpaketes,
- FIG 42: eine weitere geschlossene Nut im Läuferblechpaket,
- FIG 43: einen weiteren Läuferstab mit einem Gusskanal für die Schmelze,
- FIG 44: den weiteren Läuferstab in der weiteren geschlossenen Nut des Läuferblechpaketes, und
- FIG 45: den Läuferstab mit Kanal zum Guss vergossen im Kurzschlussring.

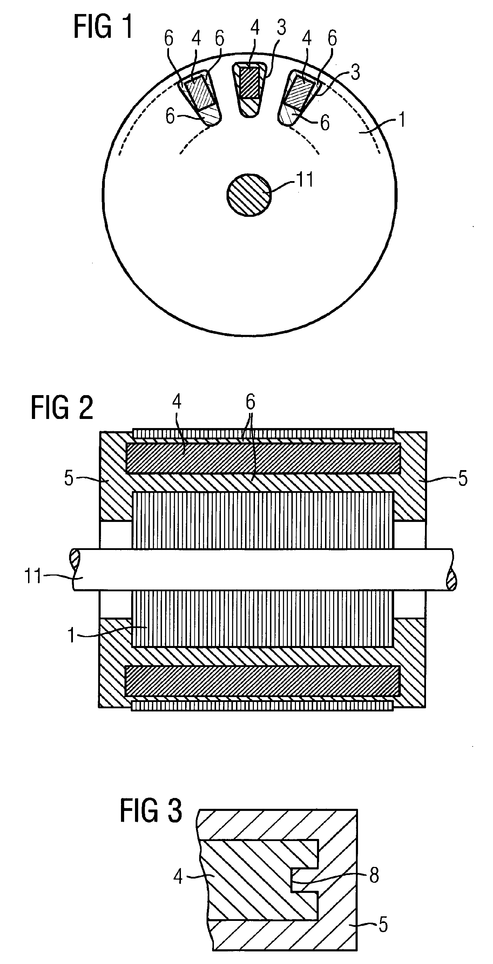

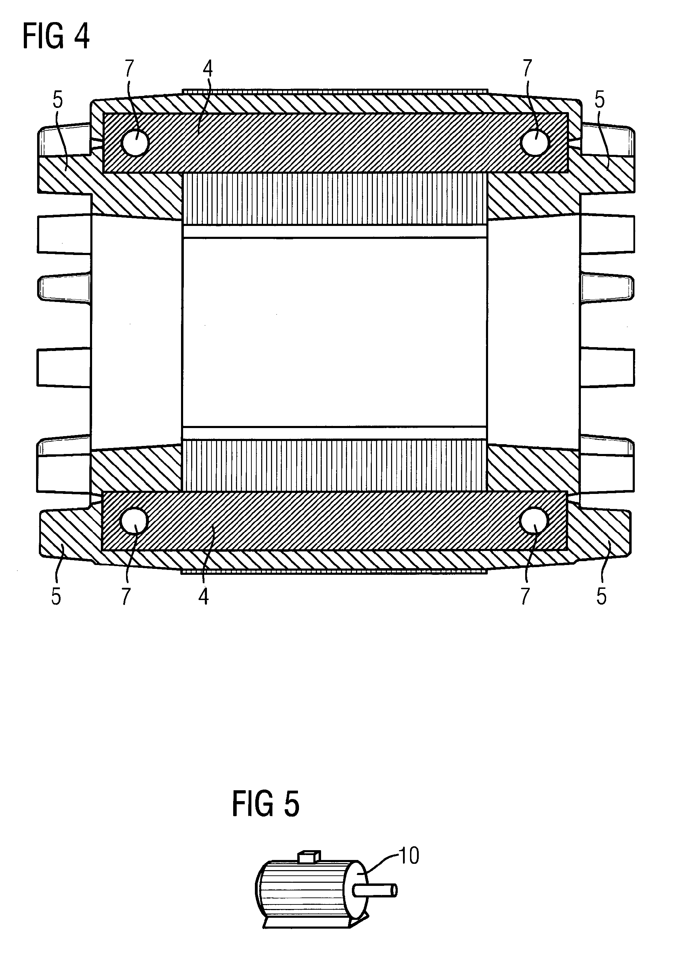

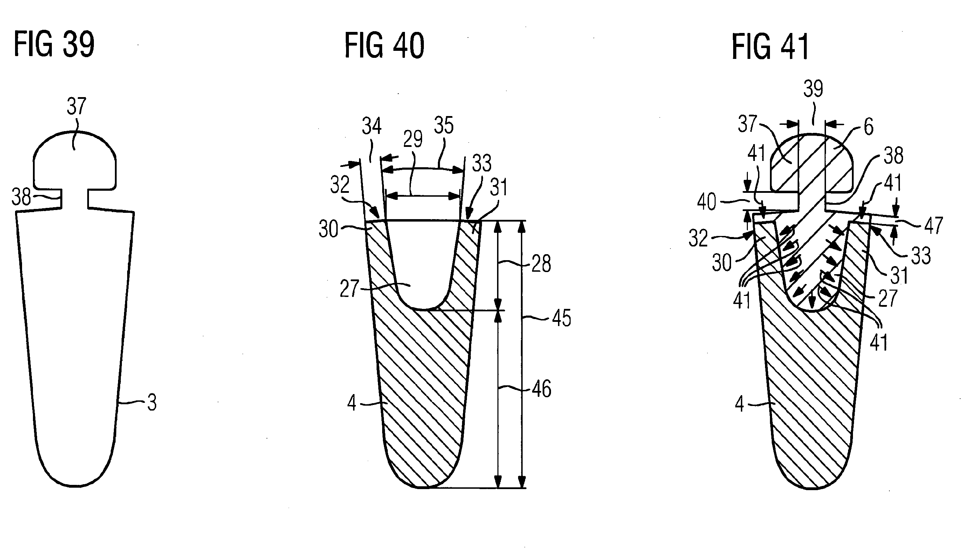

FIG 1 zeigt eine Ausführung eines Käfigläufers einer Asynchronmaschine in Hybridbauweise. Dargestellt ist ein Läuferblechpaket 1 der Asynchronmaschine, welches auf einer Welle 11 aufgeschrumpft ist. Bei der Herstellung des Käfigläufers werden zunächst Läuferstäbe 4, die vorzugsweise aus Kupfer ausgeführt sind, in Nuten 3 des Läuferblechpakets 1 eingeschoben. Wie zu erkennen ist, ist der Querschnitt der Leiter 4 kleiner als die Querschnittsfläche der Nuten 3. Somit bleibt nach dem Einlegen der Kupferstäbe noch ein Restquerschnitt der Nut 3 frei. Zur Herstellung des Kurzschlussläufers wird im nächsten Schritt ein Druckgussverfahren angewandt. Bei diesem Verfahren werden Kurzschlussringe, die stirnseitig mit den Kupferstäben im Kontakt stehen gefertigt und gleichzeitig der noch freie Raum der Nuten 3 mit einer Schmelze ausgefüllt. Innerhalb der Nuten entstehen nun nach dem Aushärten der Aluminiumschmelze in dem verbliebenen Restquerschnitt Aluminiumstabteile 6, die die Kupferstäbe in ihrer Lage fixieren und direkt an diese angrenzen. Diese Aluminiumstabteile 6 können vorteilhafter Weise auch als Anlaufstäbe der Asynchronmaschine verwendet werden, da sie gegenüber den Kupferleitern einen geringeren elektrischen Leitwert aufweisen. Insbesondere dann, wenn die Aluminiumstabteile 6 anders als in der Darstellung im radial außen gerichteten Bereich der Nut angeordnet sind (siehe Figur 41), haben diese einen positiven Effekt auf dem Drehmomentverlauf der Asynchronmaschine 10, welche beispielhaft in Figur 5 dargestellt ist.

Durch den hybriden Aufbau, d.h. durch die Verwendung von Stäben 4 aus Kupfer und Kurzschlussringen aus Aluminium lässt sich ein Käfigläufer mit besonders gutem elektrischen Wirkungsgrad herstellen. Dies ist zum einen auf die gute Leitfähigkeit von Kupfer zurückzuführen und zum anderen auf das vergleichsweise geringe Gewicht der aus Aluminium gefertigten Kurzschlussringe, was eine entsprechende relative niedrige Massenträgheit um die rotierende Achse zur Folge hat.

FIG 2 zeigt einen Schnitt durch den Käfigläufer, bei dem neben dem Läuferblechpaket 1 die von der Aluminiumschmelze umgebenen und in die Nuten 3 eingelegten Stäbe 4 zu erkennen sind. An ihren stirnseitigen Enden tauchen diese Leiter 4 in die aus Aluminiumdruckguss hergestellten Kurzschlussringe 5 ein. Durch Temperaturspiele, die der Käfigläufer im Betrieb der Maschine durchläuft, kann es insbesondere in den Endbereichen zu einer Ablösung der eingelegten Stäbe 4 von den Kurzschlussringen 5 kommen. Dies ist insbesondere durch die unterschiedlichen Wärmeausdehnungskoeffizienten der verwendeten Materialien Kupfer und Aluminium zu erklären. Daher ist es bei einem derartigen Hybridläufer wichtig, eine stabile Verbindung zwischen den beiden Materialien Kupfer und Aluminium insbesondere im Bereich der Kurzschlussringe 5 zu gewährleisten.

Die Darstellung gemäß Figur 3 zeigt einen Läuferstab 4, der an einer Stirnseite eine Nut 8 aufweist. Die Nut 8 weist bezüglich des Käfigläufers eine tangentiale Ausrichtung auf. Dadurch dass beim Gießen des Kurzschlussrings 5 Schmelze in die Nut 8 kommt wird der Läuferstab 4 im Kurzschlussring 5 mechanisch stabilisiert.

Die Darstellung gemäß Figur 4 zeigt eine weitere Ausführung des Käfigläufers in Hybridbauweise in Schnittdarstellung mit Läuferstäben 4 mit Formschlussmitteln 7 im Bereich der Kurzschlussringe 5. Die Formschlussmittel 7 der Läuferstäbe 4 sind als Durchgangslöcher ausgeführt. Sobald das mit den Läuferstäben 4 bestückte Läuferblechpaket dem Aluminiumdruckgussverfahren ausgesetzt wird, werden die Formschlussmittel 7 mit Aluminiumschmelze durchsetzt. Dies hat zur Folge, dass zusätzlich eine formschlüssige Verbindung dafür sorgt, dass die Läuferstäbe 4 im Bereich der Kurzschlussringe 5 während der thermischen Zyklen in Verbindung bleiben. Die dargestellten Formschlussmittel 7 wirken also einem Abriss der stirnseitigen Leiterenden aus den druckgegossenen Kurzschlussringen 5 entgegen.

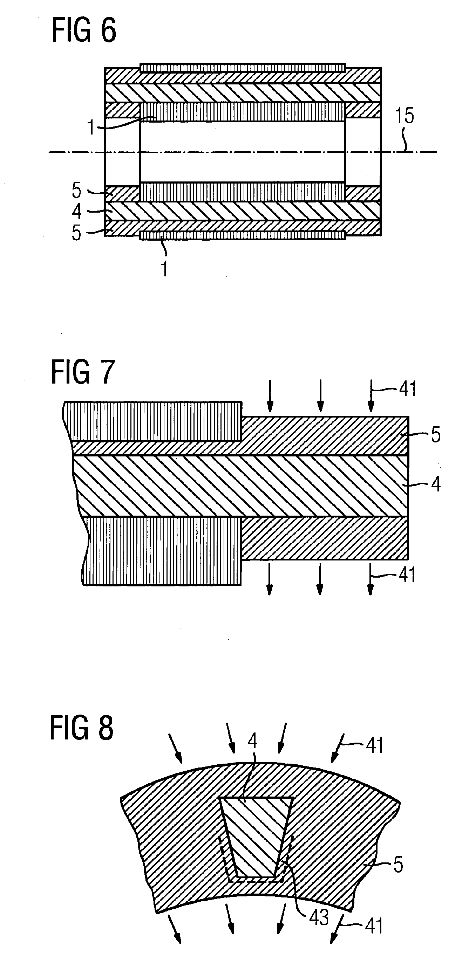

Die Darstellung gemäß Figur 6 zeigt einen Käfigläufer, bei welchem die Läuferstäbe im Nutgrund liegen. Verguss befindet sich folglich nur auf der Seite des Läuferstabes, welcher einer Achse 15 abgewandt ist, wobei hierbei nicht die Kurzschlussringe 5 betrachtet werden.

In der Darstellung nach Figur 7 wird gezeigt, wie beim Abkühlen des Kurzschlussrings 5 Kräfte auf ein Ende des Läuferstabes 4 wirken. Die Kräfte werden durch Pfeile 41 symbolisiert. Diese Kräfte können zu einem Abriss zwischen Läuferstab 4 und Kurzschlussring 5 führen, wodurch sich ein Abrissspalt 43 ergibt, welcher in Figur 8 dargestellt ist.

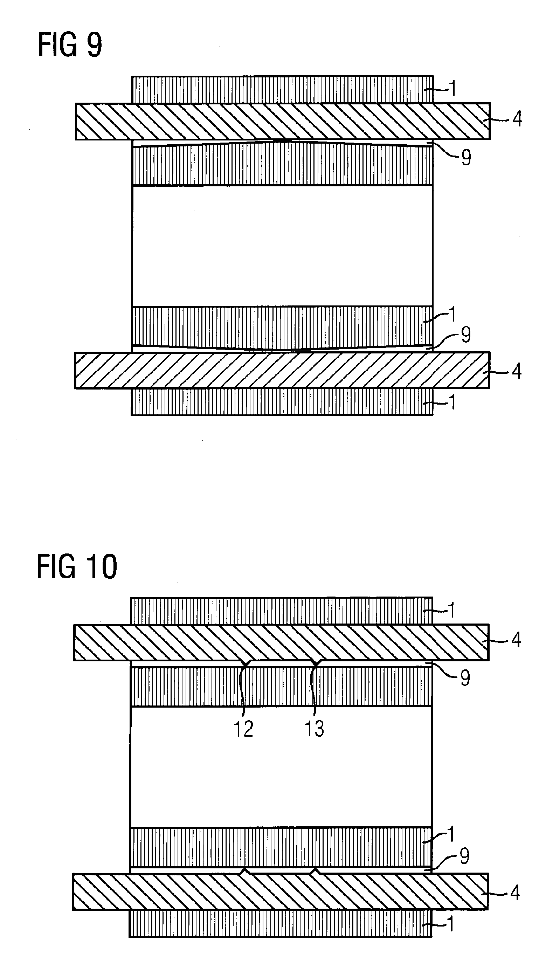

Die Darstellung gemäß Figur 9 zeigt ein Läuferpaket 1 in welches Läuferstäbe 4 eingelegt sind, wobei der Nutgrund der geschlossenen Nut des Läuferpaketes 1 derart angeschrägt ist, dass sich ein Spalt 9 ergibt. In diesen Spalt 9 kann der Läuferstab 4 durch die Kräfte bei der Abkühlung der Schmelze hineinwandern. Dadurch können Spannungen reduziert werden.

In einer Ausführungsvariante gemäß Figur 10 wird der Spalt 9 durch Nasen 12 und 13 am Läuferstab hervorgerufen.

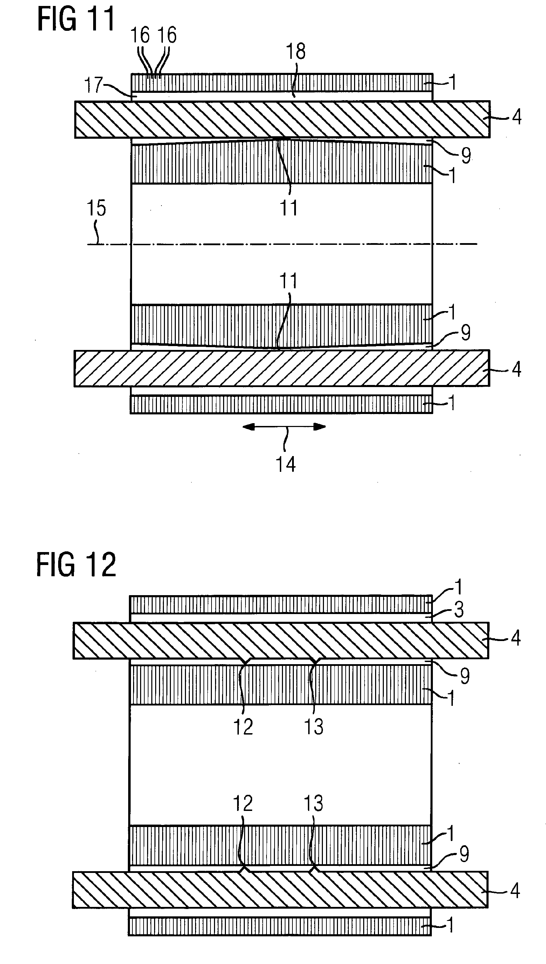

Die Darstellung gemäß Figur 11 zeigt ein Läuferpaket 1 bei welchem die Läuferbleche 16 zueinander einen Winkelversatz derart aufweisen, dass sich eine gekrümmte geschlossene Nut 3 für die Läuferstäbe 4 ausbildet. Auch durch diese Maßnahme ergibt sich ein Spalt 9 und darüber hinaus eine Kippstelle 11. Der Läuferstab 4 kann im nicht vergossenen Zustand um diesen Punkt 11 kippen. Dieser Punkt 11 befindet sich in einer axialen Richtung 14 mittig.

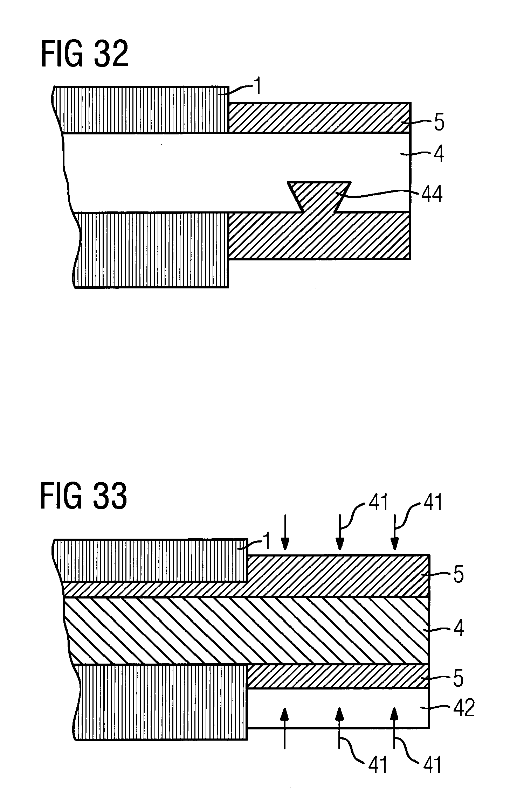

Bei einer hier vorliegenden geschrägten Ausführung der Nut 3 ist der Stab 4 vorteilhaft um den Zentrumswinkel verdreht. Dadurch liegt der Stab beispielsweise nur in der Mitte des Rotorpaketes auf. Durch die Krümmung im geschrägten Blechpaket, ergibt sich ein kleiner Spalt 9 zwischen Nutgrund und Stab an den Paketenden. Dadurch kann der Stab der Schrumpfung des Aluminiumkurzschlussringes folgen. Ein Abriss wird vermieden. Bei geraden Läuferpaketen bekommen die eingeschobenen Stäbe auf der dem Nutgrund zugewandten Seite eine Ausbuchtung (Nase 12, 13), vorzugsweise hergestellt durch eine Prägung. Die Darstellung nach Figur 12 zeigt ein entsprechendes Beispiel. Darüber hinaus kann eine nach außen aufbauende Struktur, wie bereits beschrieben, auf den Stab eingebrachte Rillen aufweisen, welche z.B. geprägt sind, wobei dies in dieser Figur nicht dargestellt ist. Um ein wegschrumpfen des inneren Teil des Kurzschlussringes 5 zu vermeiden kann auch eine stützende Geometrie wie eine Stützring 42 vorgesehen sein, wie dies in Figur 33 dargestellt ist. Ein hierfür verwendbarer Stahlring kann mitvergossen sein.

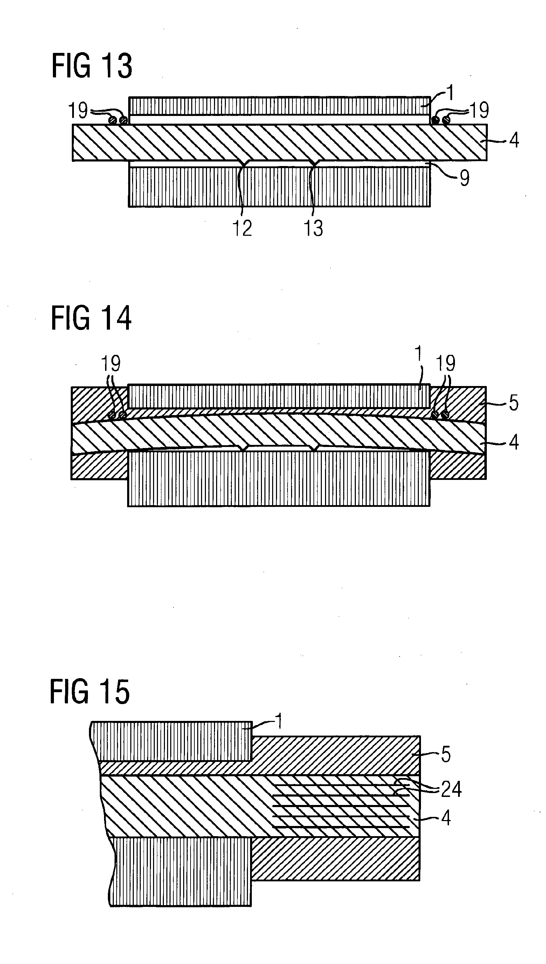

Die Darstellung gemäß Figur 13 zeigt einen Läuferstab 4, welcher zwei Kippstellen 12, 13 aufweist. Die Kippstellen 12, 13 sind in einem Bereich des Läuferstabes 4, welcher der Achse 15 (siehe Figur 11) des Käfigläufers zugewandt ist. Der der Läuferstab 4 kann eine Biegung um die Kipppunkte 12 und 13 vollziehen. Um beim Vergießen die Läuferstäbe zu fixieren, wird um diese (nicht einzeln sondern in Summe) ein Draht 19 gewickelt. Die Darstellung gemäß Figur 14 zeigt, wie sich die Stäbe 4 nach dem Verguss nach innen (zur Achse hin) gebogen haben und auch dorthin biegen konnten. Der Spalt 9 ist endseitig an den Stirnseiten des Läuferpaketes 1 geschlossen.

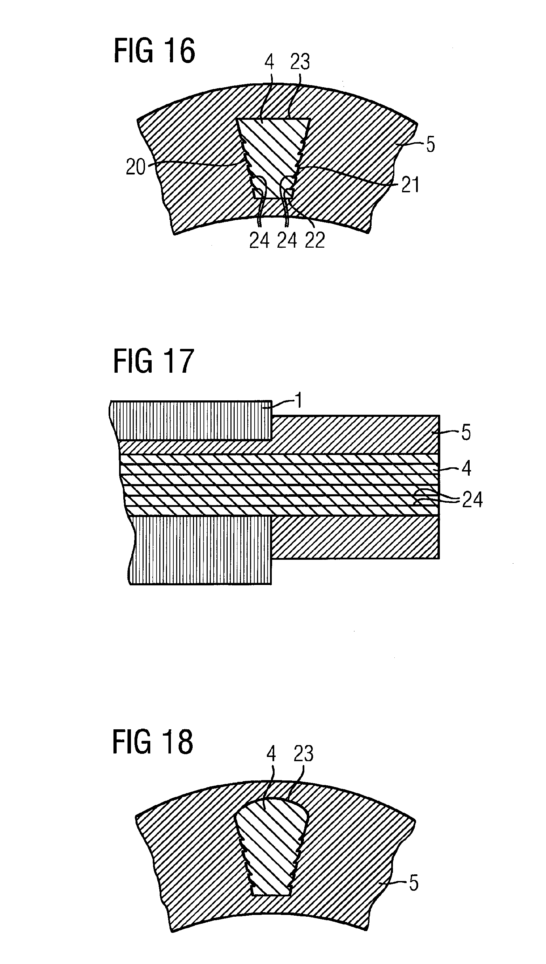

Die Darstellung gemäß Figur 15 zeigt Rillen 24 im Läuferstab 2 im Bereich des Kurzschlussrings 5. Die Rillen 24 sind axial ausgerichtet. Zur besseren Verdeutlichung zeigt Figur 16 einen axialen Schnitt, der das Profil der Rillen 24 zeigt. Ferner sind die radialen Außenflächen 20, 21 und die tangentialen Außenflächen 22, 23 des Läuferstabes gezeigt.

Figur 17 zeigt, dass die Rillen 24 sich auch in den Bereich des Läuferpaketes 1 erstrecken können.

Die Darstellung gemäß Figur 18 zeigt eine geänderte Geometrie des Läuferstabes 4 mit einer gewölbten äußeren tangentialen Außenfläche als ein weiteres Beispiel für eine Ausführungsform des Stabes 4.

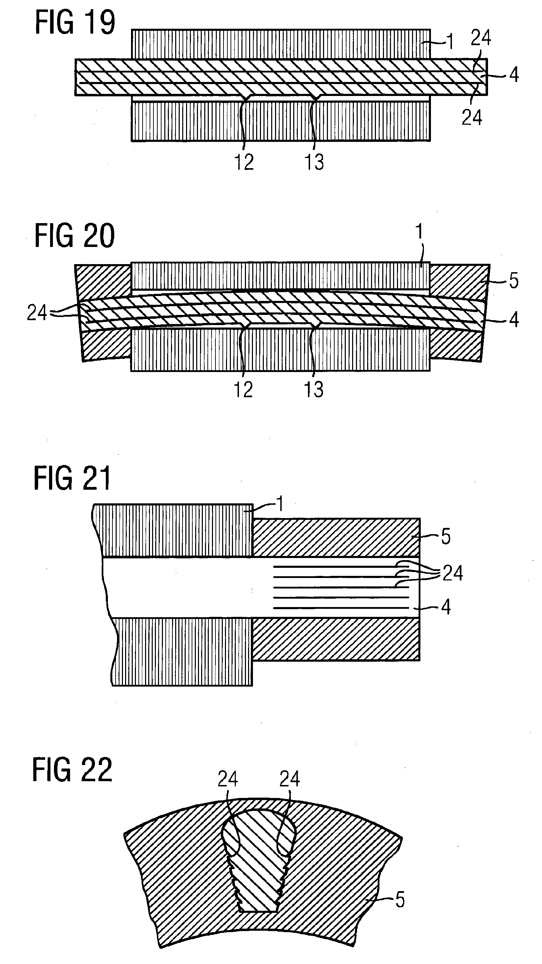

Die Darstellung gemäß Figur 19 zeigt einen Stab 4 mit Nasen 12 und 13, welcher zusätzlich Rillen 24 aufweist. Figur 20 zeigt entsprechend die Biegung des Stabes 4, nachdem der Kurzschlussring 5 erkaltet ist.

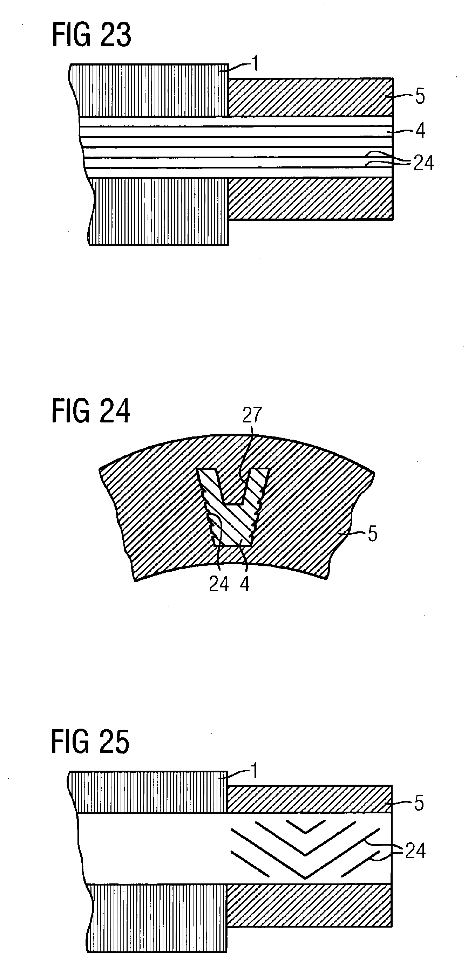

Die Darstellung gemäß Figur 21 zeigt einen Stab 4 welcher sich ohne einen Spalt im Läuferpaket befindet aber zur Besseren Anhaftung an den Kurzschlussring 5 Rillen 24 aufweist. In Figur 22 ist ein entsprechender Schnitt des Stabes 4 gezeigt, welcher senkrecht zur Achse des Läufers verläuft. Hierzu entsprechend zeigt Figur 23, dass auch in einer derartigen Ausgestaltung sich die Rillen 24 über eine axiale Länge des Stabes 4 erstrecken können.

Die Darstellung gemäß Figur 24 zeigt einen Stab 4 welcher zusätzlich zu den Rillen 24 auch einen Kanal 27 aufweist.

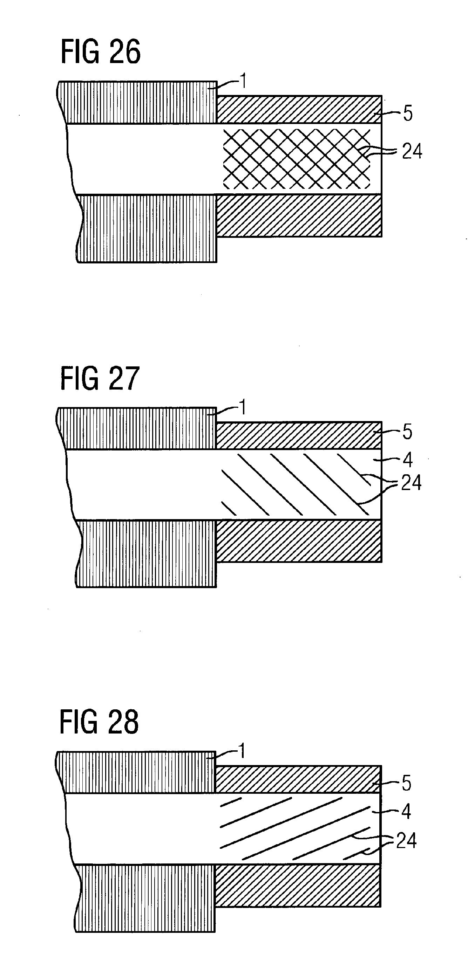

Die Darstellungen gemäß den Figuren 25 bis 30 zeigen verschiedenste Ausrichtungen und Verläufe der Rillen 24, welche zu einer besseren Anhaftung von Verguss an den Stab 4 dienen.

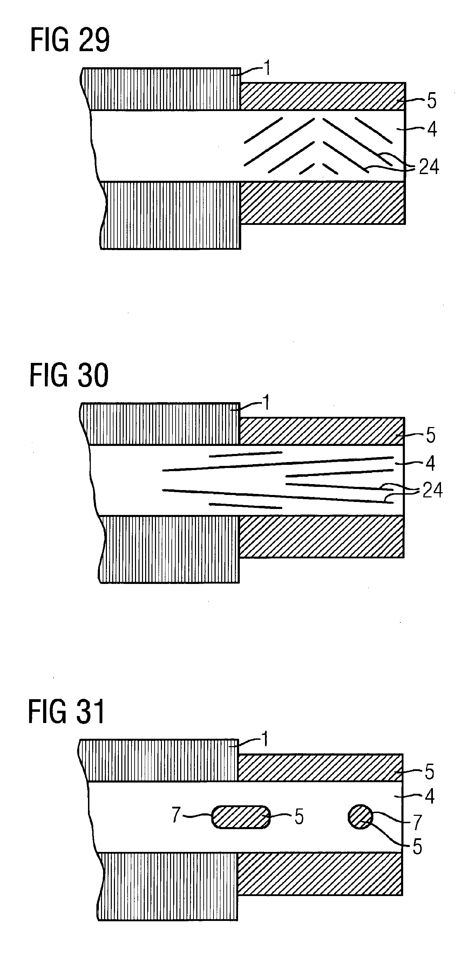

Die Darstellung gemäß Figur 31 zeigt Durchgangslöcher 7 welche beispielsweise mit Aluminium gefüllt sind (Verguss) und einen Teil des elektrischen Kurzschlussrings 5 darstellen.

Zur besseren mechanischen Verbindung gemäß Figur 32 zwischen Kurzschlussring 5 und Läuferstab 4 kann auch eine schwalbenschwanzartige Geometrie 44 eines Stabes 4 vorgesehen sein.

Die Darstellung nach Figur 33 zeigt einen Stützring, welcher Kräfte 41 aufnehmen kann, die durch die Abkühlung der Schmelze für den Kurzschlussring 5 auftreten.

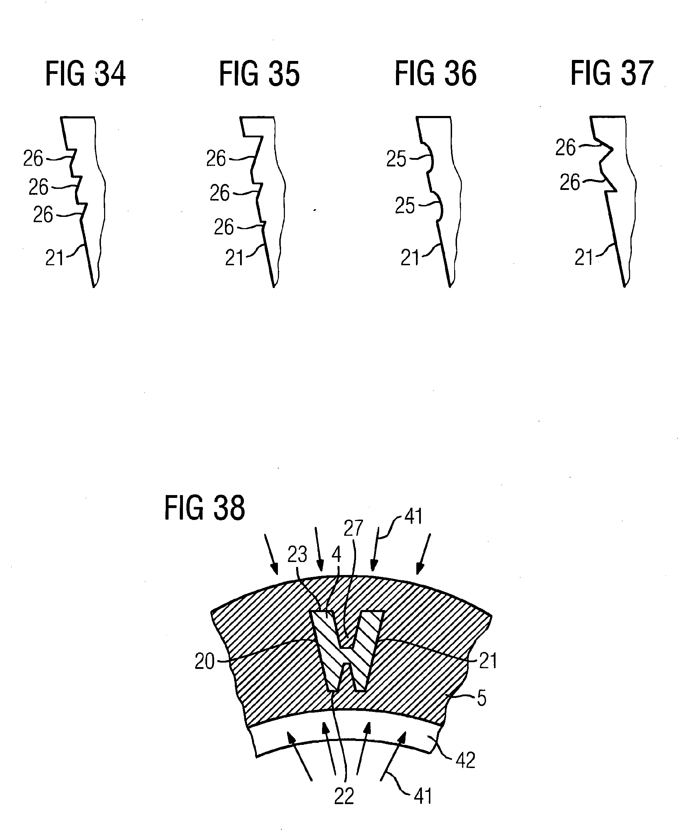

Die Darstellungen gemäß den Figuren 34 bis 37 zeigen beispielhaft verschiedene Profile (Querschnitte) der Rillen 24. Gezeigt ist ferner, dass eine Rille 24 beispielsweise einen bogenförmigen Querschnitt 25 oder auch einen keilförmigen Querschnitt 26 aufweisen kann.

Gemäß der Darstellung nach Figur 37 kann ein Läuferstab zwei Kanäle aufweisen, einen radial nach außen gerichteten Kanal 27 und einen gegenüber liegenden radial nach innen gerichteten Kanal im Nutgrund. Ferner ist in Figur 37 gezeigt, wie der Stützring 42 den Kurzschlussring 5 stützt.

Die Darstellung gemäß Figur 39 zeigt eine geschlossene Nut 3 wie diese im Läuferpaket für die Aufnahme der Stäbe vorgesehen ist. Die Nut 3 weist eine Einschnürung 38 auf, welche die Nut 3 in einen primären Gießkanal 37 unterteilt und einen Teil zum Einlegen des Stabes. Ein entsprechender Stab 4 ist in Figur 40 dargestellt. Der Stab 4 weist eine Gesamthöhe 45 und einen Kanal 27 auf. Der Kanal 27 weist einen Boden auf (Nutgrund), woraus sich ein Nutgrundhöhe 46 ergibt. Der Kanal 27 hat eine Tiefe 28 und eine Öffnungsbreite 29. Die Öffnung weist einen Öffnungswinkel 35 auf. Begrenzt ist der Kanal 27 durch Schenkel 30 und 31 welche an Ihren Enden Schultern 32 und 33 ausbilden. Die Schulter weist eine Breite 34 auf, welche kleiner ist als die Öffnungsbreite 29. Wie sich der Stab 4 in der Nut 3 befindet zeigt Figur 41, wobei das Aluminium bereits eingegossen ist und somit auch bereits das Aluminiumstabteil 6 ausgebildet ist. Figur 41 zeigt ferner die Höhe 40 der Einschnürung und die Breite 39 der Einschnürung. Pfeile 41 zeigen an welche Kräfte die mit Druck eingepresste Schmelze auf den Stab 4 ausübt. Druck wird dabei sowohl seitlich auf die Schenkel 30 und 31 wie auch auf die Schultern 32, 33 ausgeübt, da sich an den Schultern noch ein Schmelzenraum von der Höhe 47 befindet.

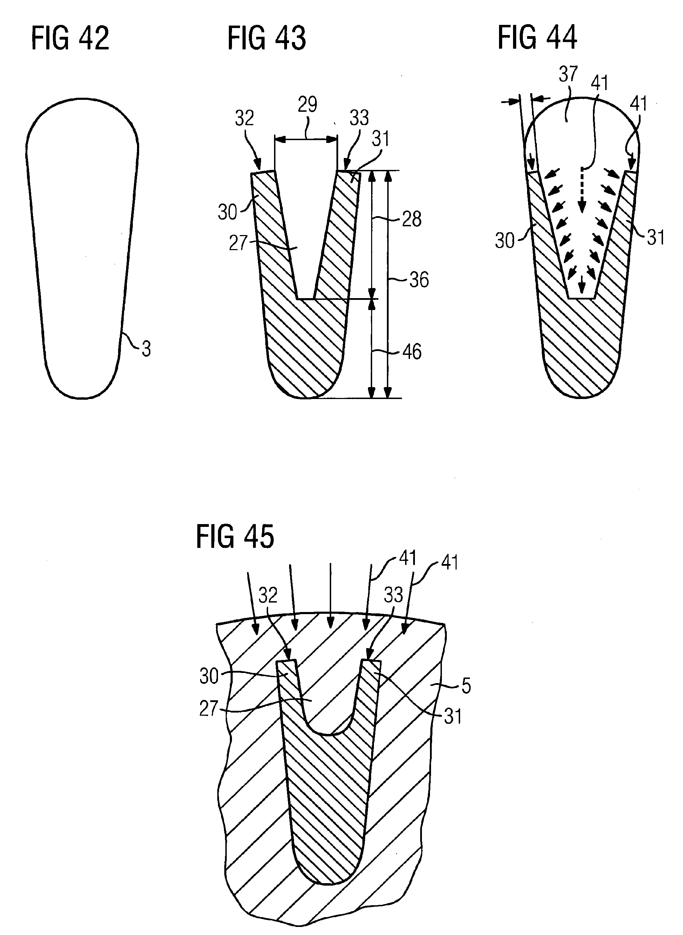

Die Darstellung gemäß Figur 42 zeigt alternativ zur Figur 39 eine weitere mögliche Gestaltung des Querschnittes der Nut 3. Entsprechend dazu zeigt Figur 43 eine alternative Gestaltung des Stabes 4. Auffallend dabei ist, dass die Kanaltiefe 28 größer ist als die Nutgrundhöhe 46. In ähnlicher Weise wie Figur 41 zeigt auch Figur 44 wie der Stab 4 in der Nut 3 zu liegen kommt, wobei gemäß Figur 4 die Schmelze nicht dargestellt ist.

Die Darstellung gemäß Figur 45 zeigt in einem Schnitt quer zur Achse, wie der Stab 4 mit dem Kanal 27 in den Kurzschlussring 5 eingegossen ist und wie auf diesen Kräfte 41 zur Achse gerichtet wirken.

## Patentansprüche

1. Läuferstab (4) eines Käfigläufers einer Asynchronmaschine, welcher tangentiale Außenflächen (22, 23) und radiale Außenflächen (20, 21) aufweist, wobei der Läuferstab (4) an den radialen Außenflächen (20,21) eine Kontur aufweist, wobei die Kontur eine weitere Angriffsfläche bildet, um nach dem stirnseitigen Angießen eines Kurzschlussringes (5) an ein Läuferblechpaket (1) des Käfigläufers durch einen Druckguss den Läuferstab (4) während des Schrumpfens des Kurzschlussrings (5) nach innen zu bewegen, wobei die Kontur **Rillen** (24, 25, 26) **aufweist.**

2. Läuferstab (4) nach Anspruch 1, wobei die Kontur an Stabenden des Läuferstabes (4) eingebrachte Rillen (24, 25, 26) sind, die mit einer Schmelze des Kurzschlussringes (5) eine Verzahnung bilden können.

3. Käfigläufer welcher einen Läuferstab (4) nach einem der Ansprüche 1 bis 2 aufweist, wobei der Käfigläufer
- das Läuferblechpaket (1) mit Nuten,
- stirnseitig an das Läuferblechpaket (1) angegossene Kurzschlussringe (5) eines ersten Materials und
- in den Nuten angeordnete Leiter eines zweiten Materials mit einem höheren spezifischen elektrischen Leitwert als der des ersten Materials umfasst,
wobei ein in den Nuten angeordneter Leiter der Läuferstab (4) ist.

4. Käfigläufer nach Anspruch 3, wobei die Kontur an Stabenden des Läuferstabes (4) eingebrachte Rillen (24, 25, 26) sind, die mit einer Schmelze des Kurzschlussringes (5) eine Verzahnung bilden.

## Claims

1. Rotor bar (4) of a squirrel-cage rotor of an asynchronous machine, which bar has tangential outer faces (22, 23) and radial outer faces (20, 21), wherein the rotor bar (4) has a contour on the radial outer faces (20, 21), wherein the contour forms a further engagement area in order to move the rotor bar (4) inwardly while a short-circuit ring (5) cast at the end face onto a laminated rotor core (1) of the squirrel-cage rotor by die-casting is contracting, wherein the contour has grooves (24, 25, 26).

2. Rotor bar (4) according to claim 1, wherein the contour consists of grooves (24, 25, 26) that are applied to ends of the rotor bar (4) and can form an interlocking engagement with a molten material of the short-circuit ring (5).

3. Squirrel-cage rotor having a rotor bar (4) according to one of claims 1 to 2, wherein the squirrel-cage rotor comprises
- the laminated rotor core (1) having slots,
- short-circuit rings (5) made of a first material that are cast onto the laminated rotor core (1) at its end faces, and
- conductors arranged in the slots and made of a second material having a higher specific electrical conductivity than that of the first material,
wherein a conductor arranged in the slots is the rotor bar (4).

4. Squirrel-cage rotor according to claim 3, wherein the contour consists of grooves (24, 25, 26) that are applied to ends of the rotor bar (4) and form an interlocking engagement with a molten material of the short-circuit ring (5).

## Revendications

1. Barre ( 4 ) d'un rotor à cage d'une machine asynchrone, qui a des surfaces ( 22, 23 ) extérieures tangentielles et des surfaces ( 20, 21 ) extérieures radiales, la barre ( 4 ) du rotor ayant un contour sur les surfaces ( 20, 21 ) extérieures radiales, le contour formant une surface d'attaque supplémentaire pour, après la coulée du côté frontale d'une anneau ( 5 ) de court-circuit sur un paquet ( 1 ) de tôles rotoriques du rotor à cage, déplacer vers l'intérieur, pendant le rétreint de l'anneau ( 5 ) de court-circuit la barre ( 4 ) rotorique par une coulée sous pression, le contour ayant des rainures ( 24, 25, 26 ).

2. Barre ( 4 ) d'un rotor suivant la revendication 1, dans laquelle le contour comprend des rainures ( 24, 25, 26 ) ménagées aux extrémités de la barre ( 4 ) du rotor et pouvant former une denture avec une partie fondue de l'anneau ( 5 ) de court-circuit.

3. Rotor à cage qui comprend une barre ( 4 ) de rotor suivant l'une des revendications 1 à 2, le rotor à cage comprenant :
- le paquet ( 1 ) de tôles rotoriques ayant des encoches,
- des anneaux ( 5 ) de court-circuit en un premier matériau coulés du côté frontal sur le paquet ( 1 ) de tôles rotoriques et
- un conducteur disposé dans les encoches en un deuxième matériau ayant une conductivité électrique plus grande que celle du premier matériau,
dans lequel un conducteur disposé dans les encoches est la barre ( 4 ) du rotor.

4. Rotor à cage suivant la revendication 3, dans lequel le contour comprend des rainures ( 24, 25, 26 ) ménagées aux extrémités de la barre ( 4 ) du rotor et formant une denture avec une partie fondue de l'anneau ( 5 ) de court-circuit.
